# EUROPÄISCHE PATENTANMELDUNG

(11) **EP 2 426 689 A2**
(43) Veröffentlichungstag der Anmeldung: **07.03.2012**
(21) Anmeldenummer: 11178297.5
(22) Anmeldetag: 22.08.2011
(51) Int. Cl.: H01H 33/59, H02H 9/00

(54) **Verfahren zum Zuschalten einer induktiven Last sowie Anschlussschaltung zur Durchführung des Verfahrens**

(30) Priorität: 07.09.2010 DE 102010044600
(71) Anmelder: Alstom Technology Ltd, 5400 Baden (CH)
(72) Erfinder: Rüdel, Andy, 67454 Hassloch (DE); Meinecke, Carsten, 76199 Karlsruhe (DE); Reis, Johann, 68647 Biblis (DE)

(57) **Zusammenfassung**

Die Erfindung betrifft ein Verfahren zum Zuschalten einer induktiven Last, insbesondere eine Wicklung eines Generators, zu Testzwecken an eine vorgegebene Wechselspannung im Mittelspannungsbereich, bei welchem Verfahren die induktive Last durch Einschalten eines Leistungsschalters (17) an die Mittelspannung angeschlossen wird. Zur Reduzierung des Einschaltstromes erfolgt das Zuschalten dann, wenn die Mittelspannung eine vorbestimmte Phasenlage durchläuft.

## Beschreibung

### TECHNISCHES GEBIET

Die vorliegende Erfindung bezieht sich auf das Gebiet der elektrischen Energieerzeugung. Sie betrifft ein Verfahren zum Zuschalten einer induktiven Last, insbesondere einer Wicklung durch die Statorbohrung eines Generators, an eine vorgegebene Wechselspannung im Mittelspannungsbereich gemäss dem Oberbegriff des Anspruchs 1. Sie betrifft weiterhin eine Anschlussschaltung zur Durchführung des Verfahrens.

### STAND DER TECHNIK

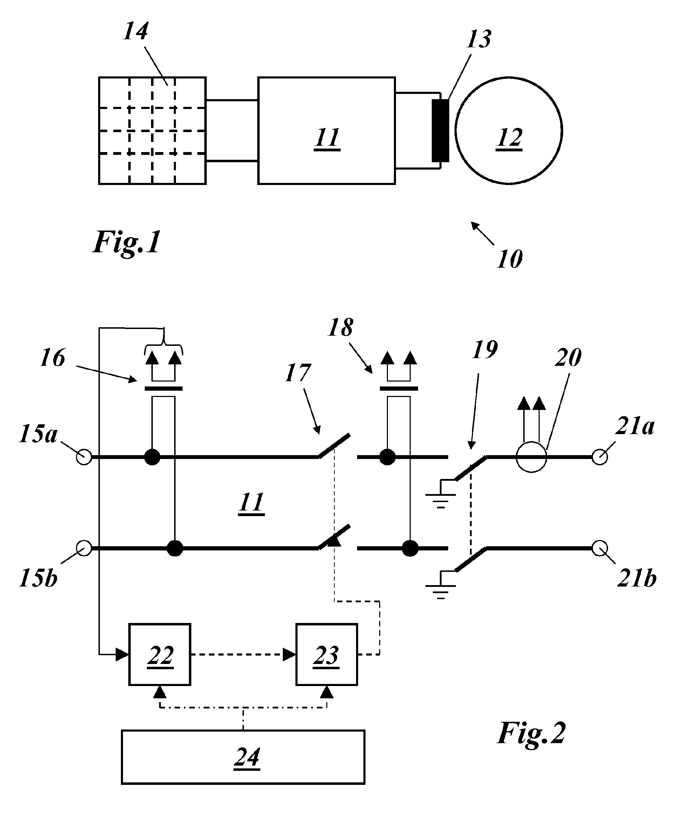

Für Hochfluss-Messungen am Stator eines Generators muss eine Mittelspannung von 6-10 kV an eine Spule beziehungsweise Wicklung angeschlossen und zugeschaltet werden, die aus 5-12 Windungen eines Mittelspannungskabels besteht, das durch die Statorbohrung hindurch gewickelt ist. Bisher wurde die Mittelspannung dadurch zugeschaltet, dass ein herkömmlicher Mittelspannungs-Leistungsschalter aus einem zugeordneten Schaltfeld geschlossen wurde. Die prinzipielle Anordnung für dieses Vorgehen ist in Fig. 1 dargestellt. In der Messanordnung 10 der Fig. 1 ist eine Wicklung 13 eines Generators 12 über eine Anschlussschaltung 11 mit einem Mittelspannungs-Schaltfeld 14 verbindbar.

Aufgrund einer zeitweisen Gleichstromkomponente im Schaltstrom und der hohen magnetischen Remanenz des Statorkerns können dabei extrem hohe Einschaltströme auftreten. Hierdurch ergeben sich ernsthafte Probleme, den Schutzschalter geschlossen zu halten, wenn die Einschaltströme die Grenzwerte der Überstromauslöser im einspeisenden Mittelspannungs-Schaltfeld überschreiten.

### DARSTELLUNG DER ERFINDUNG

Es ist daher Aufgabe der Erfindung, ein Verfahren zum Zuschalten einer solchen induktiven Last an eine Mittelspannung zu schaffen, welches die Nachteile bekannter Verfahren vermeidet und sich durch das Auftreten minimaler Einschaltströme auszeichnet, sowie eine Anschlussschaltung zur Durchführung des Verfahrens anzugeben.

Die Aufgabe wird durch die Gesamtheit der Merkmale der Ansprüche 1 und 8 gelöst. Für die Erfindung wesentlich ist, dass zur Reduzierung des Einschaltstromes das Zuschalten dann erfolgt, wenn die Mittelspannung eine vorbestimmte Phasenlage durchläuft.

Eine Ausgestaltung des Verfahrens nach der Erfindung ist dadurch gekennzeichnet, dass das Zuschalten dann erfolgt, wenn die Mittelspannung ihr Phasenmaximum durchläuft.

Eine andere Ausgestaltung des erfindungsgemässen Verfahrens ist dadurch gekennzeichnet, dass der zeitliche Verlauf der Mittelspannung abgetastet wird, dass festgestellt wird, wann die Mittelspannung einen ausgezeichneten Wert annimmt, der eine feste Zeitspanne vor dem Durchlaufen der vorbestimmten Phasenlage erreicht wird, und dass nach Ablauf der festen Zeitspanne das Zuschalten erfolgt.

Insbesondere ist der ausgezeichnete Wert der Mittelspannung ein Nulldurchgang.

Eine andere Ausgestaltung zeichnet sich dadurch aus, dass der Leistungsschalter eine ihm eigene Verzögerungszeit aufweist, und dass die feste Zeitspanne grösser gewählt ist als die Verzögerungszeit des Schutzschalters.

Eine andere Ausgestaltung des erfindungsgemässen Verfahrens ist dadurch gekennzeichnet, dass als Leistungsschalter der Leistungsschalter eines Mittelspannungs-Schaltfeldes verwendet wird.

Eine andere Ausgestaltung des erfindungsgemässen Verfahrens ist dadurch gekennzeichnet, dass eine Mittelspannung von 6-10 kV verwendet wird.

Die erfindungsgemässe Anschlussschaltung zur Durchführung des Verfahrens weist Mittelspannungsanschlüsse zum Anschluss der Mittelspannung sowie Wicklungsanschlüsse zum Anschluss der induktiven Last auf, die untereinander über einen Leistungsschalter verbunden sind, wobei zwischen den Mittelspannungsanschlüssen und dem Leistungsschalter ein erster Spannungswandler angeordnet ist, der Ausgang des ersten Spannungswandlers an den Eingang eines Nulldurchgangs-Detektors angeschlossen ist, und der Nulldurchgangs-Detektor über eine nachfolgende Verzögerungsschaltung den Leistungsschalter steuert.

Eine Ausgestaltung der Anschlussschaltung nach der Erfindung ist dadurch gekennzeichnet, dass die Verzögerungszeit der Verzögerungsschaltung einstellbar ist.

Eine andere Ausgestaltung der Anschlussschaltung ist dadurch gekennzeichnet, dass ein Steuerpult vorgesehen ist, über welches der Nulldurchgangs-Detektor und die Verzögerungsschaltung in einen Bereitschaftszustand versetzbar sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das stark vereinfachte Schaltbild einer Messanordnung für die Hochflussmessung am Stator eines Generators;
- Fig. 2: den Aufbau einer Anschlussschaltung für eine Messanordnung nach Fig. 1 gemäss einem Ausführungsbeispiel der Erfindung;
- Fig. 3: den zeitlichen Verlauf der gemessenen Spannungen vor und hinter dem ersten Schutzschalter aus Fig. 2;
- Fig. 4: im Spannungs-Zeit-Diagramm den Ablauf des Zuschaltvorgangs gemäss einem Ausführungsbeispiel des erfindungsgemässen Verfahrens; und
- Fig. 5: das Flussdiagramm des Zuschaltvorgangs aus Fig. 4.

Die der Erfindung zu Grunde liegende Idee besteht darin, die Einschaltströme, die während der Durchführung von Hochfluss-Messungen auftreten, in erster Näherung dadurch zu minimieren, dass der zugehörige Leistungsschalter, der die zugehörige Wicklung mit der Mittelspannungsquelle verbindet, zum richtigen Zeitpunkt geschlossen wird. Als richtiger Zeitpunkt wird insbesondere das Phasenmaximum der Wechselspannung der Mittelspannungsquelle genommen.

In Fig. 2 ist der innere Aufbau einer entsprechenden Anschlussschaltung 11 wiedergegeben, die zur Durchführung des erfindungsgemässen Verfahrens besonders geeignet ist. Die Anschlussschaltung 11 weist auf der Eingangsseite zwei Mittelspannungsanschlüsse 15a und 15b auf, an welchen die verwendete Mittelspannung anliegt. Von den Mittelspannungsanschlüssen 15a und 15b laufen Verbindungsleitungen zu zwei am Ausgang befindlichen Wicklungsanschlüssen 21 a und 21 b, an welche eine Wicklung 13 (Windungen eines Mittelspannungskabels, welches durch die Statorbohrung gewickelt ist) des zu testenden Generators 12 angeschlossen ist. In die Verbindungsleitungen ist ein Trenner 19 eingefügt, mit dessen Hilfe die Wicklungsanschlüsse 21 a und 21 b spannungslos geschaltet und geerdet werden können.

Zwischen dem Trenner 19 und den Mittelspannungsanschlüssen 15a und 15b ist ein Leistungsschalter 17 eingefügt, der den eigentlichen Einschaltvorgang steuert. Die Steuerung des Leistungsschalters 17 erfolgt nach Massgabe des zeitlichen Verlaufs der an den Mittelspannungsanschlüssen 15a und 15b liegenden Mittelspannung. Diese Wechselspannung wird über einen Spannungswandler 16 abgegriffen und das Ausgangssignal des Spannungswandlers 16 einem Nulldurchgangs-Detektor 22 zugeführt, der die Nulldurchgänge der Wechselspannung detektiert und entsprechende Signale an eine Verzögerungsschaltung 23 weitergibt. Die zeitlich verzögerten Detektorsignale werden dann zur Steuerung des Leistungsschalters 17 verwendet. Damit eines der zeitlich verzögerten Detektorsignale den Leistungsschalter 17 schliessen kann, müssen zunächst von einem Steuerpult 24 aus der Nulldurchgangs-Detektor 22 und die Verzögerungsschaltung 23 durch entsprechende Signale (enable command) in Bereitschaft versetzt werden. Ist dies geschehen, wird das nächstfolgende Detektorsignal aus dem Nulldurchgangs-Detektor 22 nach entsprechender Verzögerung in der Verzögerungsschaltung 23 zum Einschalten des Leistungsschalters 17 benutzt.

Ein zwischen dem Leistungsschalter 17 und dem Trenner 19 angeordneter weiterer Spannungswandler 18 kann dazu dienen, das Verhalten der Ausgangsspannung während des Einschaltens zu überwachen. Zusätzlich kann ein Stromwandler 20 zur Kontrolle des fliessenden Stromes während des Einschaltvorgangs verwendet werden.

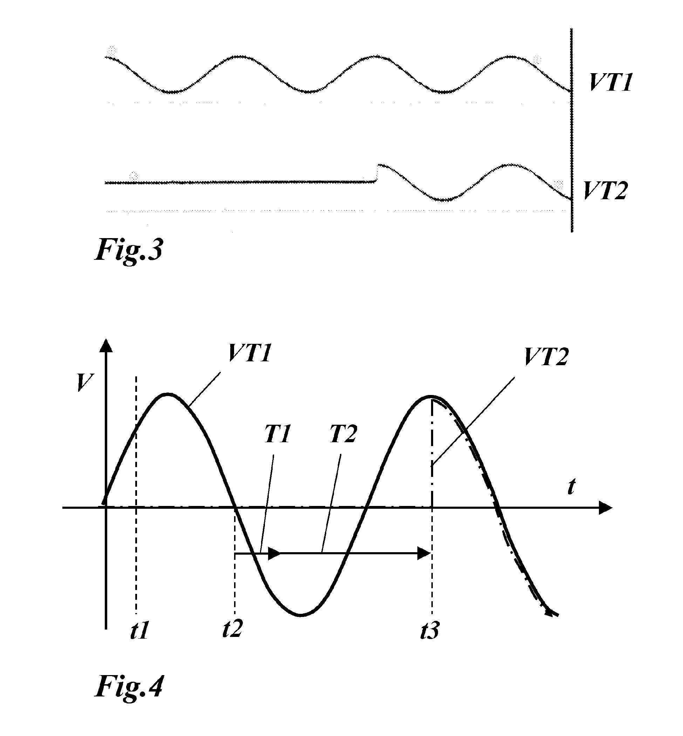

Die mit den beiden Spannungswandlern 16 und 18 abgenommenen Spannungen VT1 und VT2 haben beim Einschalten die in Fig. 3 dargestellten zeitlichen Verläufe. Bis zum Einschalten ist die Wandlerspannung VT2 hinter dem Leistungsschalter 17 null, während die am Eingang liegende Spannung (VT1) voll anliegt. Wird der Leistungsschalter 17 geschlossen, springt die Wandlerspannung VT2 hinter dem Leistungsschalter 17 auf den dem Wert der aktuell anliegenden Mittelspannung entsprechenden Wert und ist von da ab identisch mit der Wandlerspannung VT1.

In einem Einstellmodus sind zunächst der Leistungsschalter 17 und der Trenner 19 geöffnet. Es wird dann der Leistungsschalter 17 geschlossen und dabei werden gleichzeitig Spannungsverläufe der Wandlerspannungen VT1 und VT2 oszillographisch aufgenommen (siehe Fig. 3). Die Verzögerungszeit in der Verzögerungsschaltung 23 wird nun so eingestellt, dass die Summe aus der eingestellten Verzögerungszeit (T1 in Fig. 4) und aus der dem Leistungsschalter 17 inhärenten Verzögerungszeit (T2 in Fig. 4) gerade so gross ist, dass die Wechselspannung dann an den Wicklungsanschlüssen 21 a und 21 b anliegt, wenn die Wechselspannung das Phasenmaximum erreicht.

Ist diese Einstellung der Verzögerungszeit vorgenommen worden, kann die Anschlussschaltung 11 für die Durchführung der Hochflussmessung des Generators eingesetzt werden. Der Trenner 19 wird dazu dauerhaft geschlossen und vom Steuerpult 24 ergeht zu Beginn des Tests (Zeitpunkt t1 in Fig. 4) ein Bereitschaftssignal an den Nulldurchgangs-Detektor 22 und die Verzögerungsschaltung 23. Wird vom Nulldurchgangs-Detektor 22 der nächste Nulldurchgang detektiert (Zeitpunkt t2 in Fig. 4) schliesst der Leistungsschalter 17 nach Durchlaufen der eingestellten Verzögerungszeit T1 und der inhärenten Verzögerungszeit T2 (Zeitpunkt t3 in Fig. 4), so dass von da ab die Wandlerspannung VT2 dem Verlauf der Wandlerspannung VT1 folgt.

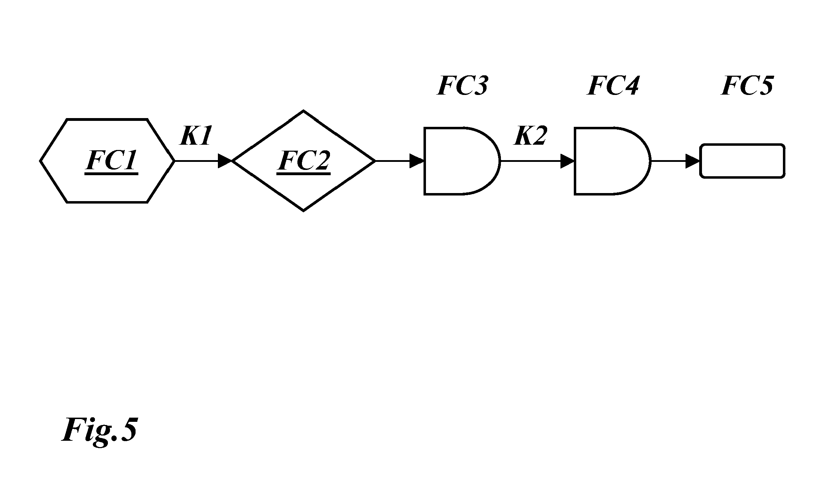

Das entsprechende Flussdiagramm dieses Ablaufs ist in Fig. 5 dargestellt. Das Flussdiagramm umfasst fünf Abschnitte FC1 bis FC5. Der erste Abschnitt FC1 bezeichnet den Übergang in den aktiven Testmodus, bei dem der Trenner 19 geschlossen wird, während der Leistungsschalter 17 noch offen bleibt. Mit einem ersten Befehl K1 werden dann die Einrichtungen 22 und 23 in Bereitschaft versetzt. Im zweiten Abschnitt FC2 wird an der Wandlerspannung VT1 des Spannungswandlers 16 der nächste Nulldurchgang detektiert. Im dritten Abschnitt FC3 wird das Detektorsignal einer ersten zeitlichen Verzögerung in der Schaltung 23 unterworfen. Mit einem zweiten Befehl K2 wird dem Leistungsschalter 17 befohlen, einzuschalten. Nach Ablauf der inhärenten Verzögerungszeit des Leistungsschalters (Abschnitt FC4) ist der Leistungsschalter 17 tatsächlich geschlossen (Abschnitt FC5).

### BEZUGSZEICHENLISTE

- 10: Messanordnung
- 11: Anschlussschaltung
- 12: Generator
- 13: Wicklung (Windungen eines Mittelspannungskabels durch die Statorbohrung)
- 14: Mittelspannungs-Schaltfeld
- 15a,b: Mittelspannungsanschluss (Einspeisung)
- 16,18: Spannungswandler
- 17: Leistungsschalter
- 19: Trenner (mit Erdungsstellung)
- 20: Stromwandler
- 21 a,b: Wicklungsanschluss
- 22: Nulldurchgangs-Detektor
- 23: Verzögerungsschaltung
- 24: Steuerpult
- VT1, VT2: Wandlerspannung
- t1,t2,t3: Zeitpunkt
- T1,2: Verzögerungszeit
- FC1-FC5: Flussdiagramm-Abschnitt
- K1,2: Befehl

## Patentansprüche

1. Verfahren zum Zuschalten einer induktiven Last, insbesondere einer Wicklung (13) eines Generators (12), an eine vorgegebene Wechselspannung im Mittelspannungsbereich, bei welchem Verfahren die induktive Last (13) durch Einschalten eines Leistungsschalters (17) an die Mittelspannung angeschlossen wird, **dadurch gekennzeichnet, dass** zur Reduzierung des Einschaltstromes das Zuschalten dann erfolgt, wenn die Mittelspannung eine vorbestimmte Phasenlage durchläuft.

2. Verfahren nach Anspruch 1, **dadurch gekennzeichnet, dass** das Zuschalten dann erfolgt, wenn die Mittelspannung ihr Phasenmaximum durchläuft.

3. Verfahren nach Anspruch 1 oder 2, **dadurch gekennzeichnet, dass** der zeitliche Verlauf der Mittelspannung abgetastet wird, dass festgestellt wird, wann die Mittelspannung einen ausgezeichneten Wert annimmt, der eine feste Zeitspanne (T1 +T2) vor dem Durchlaufen der vorbestimmten Phasenlage erreicht wird, und dass nach Ablauf der festen Zeitspanne (T1 +T2) das Zuschalten erfolgt.

4. Verfahren nach Anspruch 3, **dadurch gekennzeichnet, dass** der ausgezeichnete Wert der Mittelspannung ein Nulldurchgang ist.

5. Verfahren nach Anspruch 3 oder 4, **dadurch gekennzeichnet, dass** der Leistungsschalter (17) eine ihm eigene Verzögerungszeit (T2) aufweist, und dass die feste Zeitspanne (T1 +T2) grösser gewählt ist als die Verzögerungszeit (T2) des Leistungsschalters (17).

6. Verfahren nach einem der Ansprüche 1-5, **dadurch gekennzeichnet, dass** als Leistungsschalter (17) der Leistungsschalter eines Mittelspannungs-Schaltfeldes (14) verwendet wird.

7. Verfahren nach einem der Ansprüche 1-6, **dadurch gekennzeichnet, dass** eine Mittelspannung von 6-10 kV verwendet wird.

8. Anschlussschaltung (11) zur Durchführung des Verfahrens nach einem der Ansprüche 1-7, welche Anschlussschaltung (11) Mittelspannungsanschlüsse (15a, 15b) zum Anschluss der Mittelspannung sowie Wicklungsanschlüsse (21 a, 21 b) zum Anschluss der induktiven Last aufweist, die untereinander über einen Leistungsschalter (17) verbunden sind, **dadurch gekennzeichnet, dass** zwischen den Mittelspannungsanschlüssen (15a, 15b) und dem Leistungsschalter (17) ein erster Spannungswandler (16) angeordnet ist, dass der Ausgang des ersten Spannungswandlers (16) an den Eingang eines Nulldurchgangs-Detektors (22) angeschlossen ist, und dass der Nulldurchgangs-Detektor (22) über eine nachfolgende Verzögerungsschaltung (23) den Leistungsschalter (17) steuert.

9. Anschlussschaltung nach Anspruch 8, **dadurch gekennzeichnet, dass** die Verzögerungszeit der Verzögerungsschaltung (23) einstellbar ist.

10. Anschlussschaltung nach Anspruch 8 oder 9, **dadurch gekennzeichnet, dass** ein Steuerpult (24) vorgesehen ist, über welches der Nulldurchgangs-Detektor (22) und die Verzögerungsschaltung (23) in einen Bereitschaftszustand versetzbar sind.
